# EUROPÄISCHE PATENTSCHRIFT

(11) **EP 2 619 124 B1**
(45) Veröffentlichungstag und Bekanntmachung des Hinweises auf die Patenterteilung: **19.11.2014**
(21) Anmeldenummer: 12708766.6
(22) Anmeldetag: 31.01.2012
(51) Int. Cl.: B66C 9/02, B66C 9/04, B66C 13/12, B60L 5/36, B60L 5/40, B61B 13/04, B61C 13/04

(54) **STROMABNEHMERWAGEN MIT LÖSBAR BEFESTIGTEN FAHRWERKEN**
CURRENT COLLECTING CARRIAGE WITH RELEASABLY ATTACHED RUNNING GEARS
CHARIOT COLLECTEUR DE COURANT AVEC DES TRAINS DE ROULEMENT FIXÉS DE FAÇON AMOVIBLE

(30) Priorität: 08.02.2011 DE 102011000567
(43) Veröffentlichungstag der Anmeldung: 31.07.2013
(73) Patentinhaber: Terex MHPS GmbH, 40597 Düsseldorf (DE)
(72) Erfinder: LINDENAU, Thomas, 45721 Haltern am See (DE); KREBS, Wolfgang, 58300 Wetter (DE); EKRUTT, Kai-Uwe, 58313 Herdecke (DE)
(74) Vertreter: Moser & Götze
(86) Internationale Anmeldenummer: PCT/EP2012/051505
(87) Internationale Veröffentlichungsnummer: WO 2012/107319

(56) Entgegenhaltungen:
- CH-A- 277 125
- DE-A1- 19 813 828
- DE-B4- 19 964 581
- GB-A- 759 371
- JP-A- 7 125 631

## Beschreibung

Die Erfindung betrifft einen Stromabnehmerwagen mit lösbar mit einem Körper verbundenen Fahrwerken, über die der Stromabnehmerwagen entlang einer Schiene mit mehreren Stromleitern verfahrbar ist, und der Stromabnehmerwagen mit den Stromleitern in elektrischem Kontakt steht, wobei die Fahrwerke relativ zu dem Körper jeweils um eine Achse des Stromabnehmerwagens schwenkbar sind, die Achse vertikal bezüglich einer Ebene ausgerichtet ist, die bezogen auf den mit seiner Längserstreckung in einer Verfahrrichtung ausgerichteten Stromabnehmerwagen horizontal verläuft und die Fahrwerke über eine mit einem Bolzen in Eingriff stehende Hülse mit dem Körper verbunden sind.

Aus der deutschen Patentschrift DE 199 64 581 B4 ist ein Stromabnehmerwagen mit formschlüssig und lösbar befestigten Fahrwerken zum geradlinigen Verfahren entlang zweier Laufflächen einer stromführenden Schiene bekannt. Ein entsprechender Stromabnehmerwagen wird zur Stromversorgung von Hub- und Fahrantrieben von verfahrbaren Brückenkranen eingesetzt. Hierbei weist die stromführende Schiene ein im Querschnitt c-förmiges und nach unten offenes Profil und einen Innenraum auf. In diesem Innenraum sind mehrere Stromleiter befestigt, die sich in Längsrichtung der Schiene erstrecken. Auch sind die Stromleiter parallel zueinander beabstandet und über den Innenraum verteilt. Diese Stromleiter stehen in Kontakt mit Kontaktmitteln in Form von Kohlebürsten, die an einem Gehäuse des Stromabnehmerwagens derart angeordnet sind, dass zur Stromabnahme während des Verfahrens des Stromabnehmerwagens entlang der Laufflächen der Schiene ein direkter Schleifkontakt zwischen den Kohlebürsten und den Stromleitern besteht. Die Kohlebürsten des Stromabnehmerwagens sind jeweils mit einem ersten Ende einer elektrischen Zuleitung leitend verbunden. Die einzelnen Zuleitungen werden in einer Stromleitung zusammengeführt, die mit den strommäßig zu versorgenden Hub- und Fahrantrieben verbunden sind. Da jede Kohlebürste normalerweise maximal 35 A durchleiten kann, werden zur Erreichung höherer Stromstärken zwei oder drei Stromabnehmerwagen mechanisch und elektrisch gekoppelt. Für eine mechanische Koppelung der Stromabnehmerwagen untereinander sind an einer vorderen und einer hinteren Außenseite des Gehäuses jedes Stromabnehmerwagens, die einander gegenüberliegend jeweils in eine Verfahrrichtung zeigen, jeweils eine obere und eine untere Nut vorgesehen. Die Nuten sind horizontal und quer zu den Verfahrrichtungen ausgerichtet sowie im Querschnitt schwalbenschwanzförmig ausgebildet. In die Nuten sind profilierte, stabartig ausgebildete Kopplungsteile lösbar und in deren Längsrichtung einschiebbar. Die Profile der Kopplungsteile sind komplementär zu der Schwalbenschwanzform der Nuten, also ebenfalls schwalbenschwanzförmig, ausgebildet. Um zwei aufeinander folgende Stromabnehmerwagen miteinander zu koppeln, weist ein Verbindungskörper ein vorderes und ein hinteres Kopplungsteil auf, die einander gegenüber liegen und voneinander weg zeigen. Zusätzlich können an den Kopplungsteilen längliche Rastarme ausgebildet sein, die sich in deren Längsrichtung erstrecken. Jeder Rastarm weist ein freies und federndes Ende mit einem nasenförmig abstehenden Bereich auf, der vom Kopplungsteil weg in Richtung des Gehäuses zeigt und bei hinreichend weitem Einschieben hinter einen stufenförmig zurückspringenden Absatz der Nut schnappt. Aufgrund der Hakenwirkung der Rastarme ist ein Zurückziehen des Kopplungsteils entgegen der Einschiebrichtung nur durch ein aktives Biegen des Rastarms in die vom Gehäuse weg zeigende Richtung möglich. Auch können die Nuten dazu dienen, Radsätze an dem Stromabnehmerwagen lösbar zu befestigen. Entsprechender Weise ist dann das Kopplungsteil an einem Fahrwerk als integraler Bestandteil eines Stützkörpers eines Radsatzes befestigt.

Aus der schweizerischen Patentschrift CH 277 125 A ist ein Stromabnehmerwagen bekannt, an dessen Körper zwei Fahrwerke lösbar und schwenkbar befestigt sind. Sowohl der Körper als auch die Fahrwerke weisen Hülsenabschnitte auf, die übereinander und durch Aussparungen voneinander getrennt angeordnet sind. Zur Montage werden die Fahrwerke und der Körper in horizontaler Richtung so aufeinander zubewegt, dass die Hülsenabschnitte nach Art einer Zinkenverbindung ineinander greifen. Die Durchgangsbohrungen der Hülsenabschnitte sind hierbei zentriert übereinander angeordnet. Über einen separaten Bolzen, der in vertikaler Richtung durch die Hülsenabschnitte geschoben wird und eine vertikale Schwenkachse bildet, werden die Fahrwerke nach Art eines Scharniergelenks an dem Körper befestigt.

Zudem sind aus der japanischen Offenlegungsschrift JP 7 125631 A und aus der britischen Offenlegungsschrift GB 759 371 A Laufwagen von Hängeförderern bekannt, deren Fahrwerke um vertikale Achsen schwenkbar befestigt sind.

Der Erfindung liegt die Aufgabe zugrunde, einen verbesserten Stromabnehmerwagen mit lösbar befestigten Fahrwerken bereit zu stellen.

Diese Aufgabe wird durch einen Stromabnehmerwagen mit den Merkmalen des Anspruchs 1 gelöst. In den Unteransprüchen 2 bis 12 sind vorteilhafte Ausgestaltungen der Erfindung angegeben.

Erfindungsgemäß wird ein verbesserter Stromabnehmerwagen mit lösbar mit einem Körper verbundenen Fahrwerken, über die der Stromabnehmerwagen entlang einer Schiene mit mehreren Stromleitern verfahrbar ist, und der Stromabnehmerwagen mit den Stromleitern in elektrischem Kontakt steht, wobei die Fahrwerke relativ zu dem Körper jeweils um eine Achse des Stromabnehmerwagens schwenkbar sind, die Achse vertikal bezüglich einer Ebene ausgerichtet ist, die bezogen auf den mit seiner Längserstreckung in einer Verfahrrichtung ausgerichteten Stromabnehmerwagen horizontal verläuft und die Fahrwerke über eine mit einem Bolzen in Eingriff stehende Hülse mit dem Körper verbunden sind, dadurch erreicht, dass der Bolzen und die Hülse derart ausgebildet sind, dass die Verbindung zwischen den Fahrwerken und dem Körper durch eine relative Bewegung der Fahrwerke und des Körpers parallel zur vertikalen Achse herstellbar ist. Hierdurch ist beispielsweise bei einer innerhalb eines Baukastensystems modular ausgeführten Bauweise eine besonders schnelle und einfache Montage möglich.

In einer vorteilhaften Ausführungsform sind die Fahrwerke nach Art eines Scharniergelenks mit dem Körper verbunden.

Ein Wechsel zwischen Geradeausfahrten und Kurvenfahrten wird dadurch verbessert, dass ein elastisches Rückstellelement vorgesehen ist, das mit dem Bolzen und der Hülse derart zusammenwirkt, dass sich die Fahrwerke bei einer Geradeausfahrt des Stromabnehmerwagens selbsttätig in der Verfahrrichtung ausrichten.

Eine besonders leichtgängige Schwenkbarkeit und somit Kurvengängigkeit entsteht dadurch, dass der Bolzen einen rundlichen Querschnitt aufweist und sich mit seiner Längserstreckung parallel zur Achse erstreckt.

Eine weitere Optimierung der Montage wird dadurch erreicht, dass die Fahrwerke formschlüssig mit dem Körper verbindbar sind. Ein hierdurch schnell auszuführender Austausch der Fahrwerke beziehungsweise Radsätze bei Verschleiß oder wechselnden Einsatzzwecken führt zu einer einfachen Wartung und einem besonders anwenderfreundlichen Betrieb des Stromabnehmerwagens.

In einer vorteilhaften Ausführungsform ist die Hülse an einem in eine Längsrichtung der Hülse zeigenden Ende offen und der Bolzen durch das offene Ende in die Hülse einschiebbar.

In konstruktiv einfacher Bauweise weist die Hülse eine Wand mit einer schlitzförmigen Aussparung auf, die die Wand an einem ersten Rand beginnend teilweise oder vollständig in vertikaler Richtung mit einer Breite durchzieht und durch die ein mit dem Bolzen verbundener Tragkörper geführt ist, der sich mit einer oberen Kante an einem dritten Rand der Hülse abstützt.

Um die Einsatzmöglichkeiten von Stromabnehmerwagen zu erweitern, ist es vorteilhaft, dass ein drittes Fahrwerk zwei Bolzen umfasst, die in Verfahrrichtung des Stromabnehmerwagens gegenüberliegend vorne und hinten angeordnet sind.

Für eine konstruktiv einfach zu realisierende Aneinanderreihung von mehreren Stromabnehmerwagen, ist es vorteilhaft, dass ein erster Stromabnehmerwagen und mindestens ein zweiter Stromabnehmerwagen mittels des dritten Fahrwerks mit einander verbindbar sind. Auf diese Weise lassen sich nach dem Eisenbahnprinzip Züge von Stromabnehmerwagen bilden, wodurch eine dem Einsatzzweck angepasste und bedarfsgerechte Handhabung unterschiedlicher Stromstärken möglich ist.

Für eine standardisierte Ausgestaltung des Stromabnehmerwagens ist es vorteilhaft, dass die Bolzen an den Fahrwerken und die Hülsen am Körper des Stromabnehmerwagens oder die Bolzen am Körper des Stromabnehmerwagens und die Hülsen an den Fahrwerken angeordnet sind.

In einer besonders vorteilhaften Ausführungsform sind an jedem Fahrwerk Laufräder und Führungsräder angeordnet.

Für einen zuverlässigen Strom- beziehungsweise Steuersignalfluss ist es vorteilhaft, dass der Stromabnehmerwagen mit den Stromleitern über an dem Stromabnehmerwagen angeordnete Kontaktmittel in Strom leitendem Schleifkontakt steht.

Ein Ausführungsbeispiel der Erfindung wird anhand der nachfolgenden Beschreibung näher erläutert. Es zeigen:
Figur 1 eine perspektivische Ansicht eines entlang einer Schiene verfahrbaren Stromabnehmerwagens zur Stromversorgung einer Kranlaufkatze eines Brückenkrans,
Figur 2 eine teilgeschnittene Ansicht des Stromabnehmerwagens gemäß Figur 1 mit einer Schiene im Querschnitt,
Figur 3 eine perspektivische Ansicht eines Stromabnehmerwagens mit Fahrwerken,
Figur 4 eine perspektivische Ansicht eines Körpers des Stromabnehmerwagens gemäß Figur 2,
Figur 5a eine perspektivische Ansicht eines Fahrwerks in einer ersten Ausführungsform,
Figur 5b eine perspektivische Teilansicht eines Fahrwerks in einer zweiten Ausführungsform,
Figur 6 eine perspektivische Ansicht zweier gekoppelter Stromabnehmerwagen gemäß Figur 1 und
Figur 7 eine Ansicht des Fahrwerks zwischen den beiden Stromabnehmerwagen gemäß Figur 6.

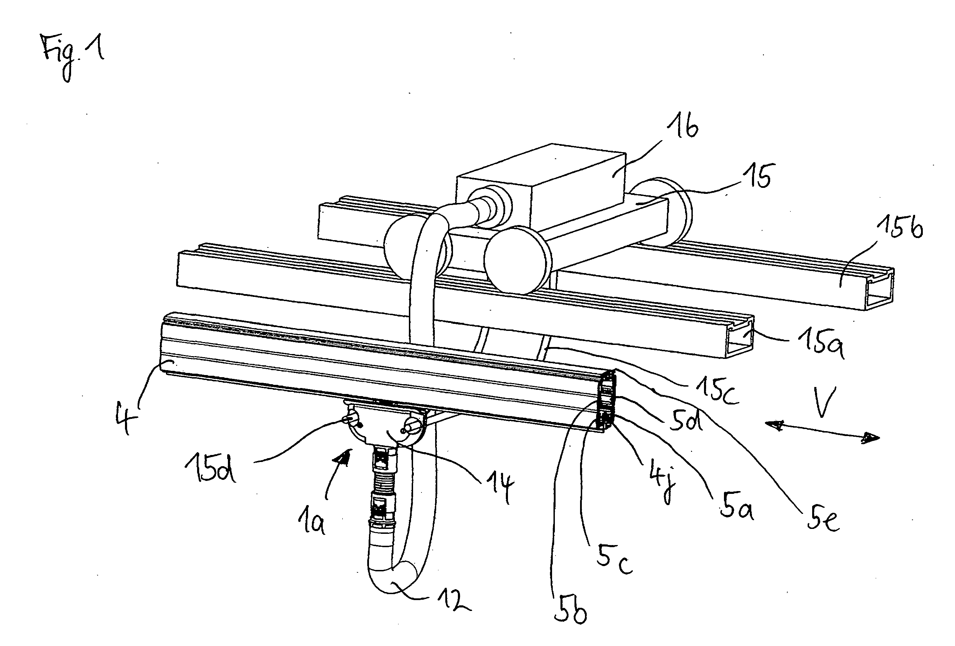

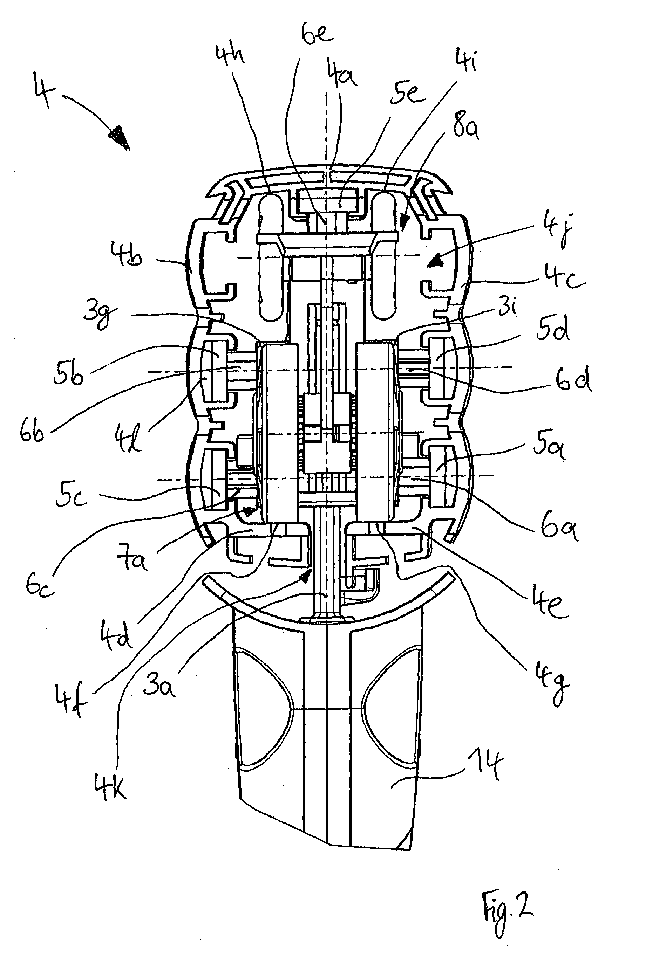

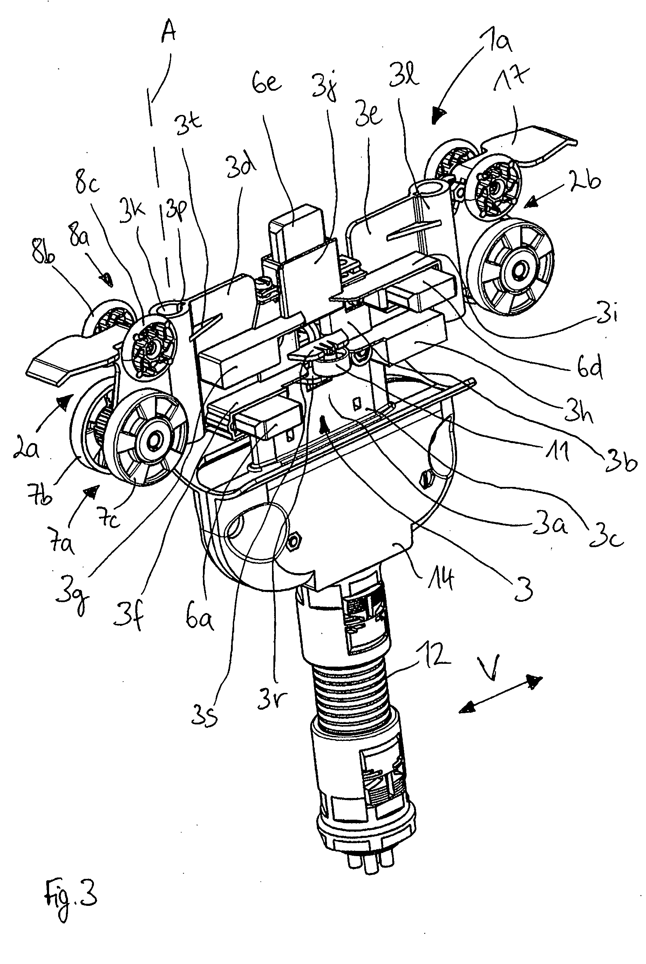

Die Figur 1 zeigt eine perspektivische Ansicht eines ersten Stromabnehmerwagens 1 a, der über von einer stromführenden Schiene 4 verdeckte Fahrwerke 2a, 2b (siehe Figur 3) entlang der stromführenden Schiene 4 in zwei im Wesentlichen horizontalen und einander entgegensetzten Verfahrrichtungen V verfahrbar ist. Die Schiene 4 ist im Querschnitt c-förmig und nach unten offen ausgebildet. Die auf diese Weise als Hohlprofil ausgebildete Schiene 4 begrenzt somit einen Innenraum 4j, in dem der Stromabnehmerwagen 1a verfährt. Im Innenraum 4j sind fünf Stromleiter 5a bis 5e befestigt, die in Längsrichtung der Schiene 4 und parallel zueinander verlaufen sowie voneinander beabstandet über das c-förmige Profil der Schiene 4 verteilt sind. Die Stromleiter 5a bis 5e sind je nach Bedarf mit einer Stromquelle oder einer Steuerung verbunden, um Strom oder Steuersignale zu führen. Von dem Stromabnehmerwagen 1a ist nur ein Gehäuse 14 zu erkennen, das ein nach unten aus der Schiene 4 herausragendes Anschlussteil 13 eines Körpers 3 umgibt. Am Körper 3 sind fünf Kontaktmittel 6a bis 6e (siehe Figur 2) angeordnet, um während des Verfahrens des Stromabnehmerwagens 1 a entlang der Schiene 4 einen direkten Schleifkontakt zwischen den Kontaktmitteln 6a bis 6e und den Stromleitern 5a bis 5e herzustellen.

Über den Stromabnehmerwagen 1 a wird eine auf zwei Laufschienen 15a, 15b in den Verfahrrichtungen V verfahrbare Kranlaufkatze 15 eines Brückenkrans mit Strom und/oder Steuersignalen versorgt. Die Kranlaufkatze 15 weist mindestens einen Motor 16 für einen Fahrantrieb und/oder einen Hubantrieb auf. Damit der Stromabnehmerwagen 1 a gemeinsam mit der Kranlaufkatze 15 entlang der Schiene 4 verfahren kann, ist der Stromabnehmerwagen 1 a mechanisch über zwei stangenförmige Mitnehmer 15c, 15d mit der Kranlaufkratze 6 verbunden. Für eine Übertragung von Strom und/oder Steuersignalen ist der Stromabnehmerwagen 1 a über eine elektrische Leitung 12 mit dem Motor 16 verbunden. Die elektrische Leitung 12 ist mit dem Anschlussteil 13 des Stromabnehmerwagens 1 a verbunden.

In der Figur 2 ist eine Ansicht des Stromabnehmerwagens 1 a gemäß Figur 1 gezeigt, der in einer geschnitten dargestellten Schiene 4 angeordnet ist. Die Schiene 4 ist als Hohlprofil mit dem im Wesentlichen rechteckförmigen Innenraum 4j sowie c-förmig ausgebildet und nach unten geöffnet. Demnach weist die Schiene 4 eine horizontale obere Stegwand 4a auf, an die sich eine linke vertikale erste Schenkelwand 4b und eine rechte vertikale zweite Schenkelwand 4c anschließen. An den der Stegwand 4a abgewandten Enden der Schenkelwände 4b, 4c schließen sich jeweils horizontal nach innen gerichtet eine erste Anschlusswand 4d und eine zweite Anschlusswand 4e derart an, dass entlang der Schiene 4 eine nach unten gerichtete schlitzförmige Öffnung 4k zwischen den Anschlusswänden 4d, 4e ausgebildet ist. Die Stegwand 4a nimmt an der Innenseite den fünften Stromleiter 5e, die erste Schenkelwand 4b an der Innenseite den zweiten und den dritten Stromleiter 5b, 5c und die zweite Schenkelwand 4c an der Innenseite den ersten und den vierten Stromleiter 5a, 5d auf. Die Innenseiten der Stegwand 4a und der Anschlusswände 4d, 4e dienen als horizontale Laufflächen 4f bis 4i für Radsätze 7a, 8a des Stromabnehmerwagens 1 a. Gezeigt sind insbesondere die erste Lauffläche 4f auf der ersten Anschlusswand 4d und die zweite Lauffläche 4g auf der zweiten Anschlusswand 4e für die unteren ersten Radsätze 7a, über die der Stromabnehmerwagen 1a in der Schiene 4 verfährt, sowie die dritte und vierte Lauffläche 4h, 4i an der Stegwand 4a für die oberen zweiten Radsätze 8a, über die der Stromabnehmerwagen 1 a in der Schiene 4 geführt wird.

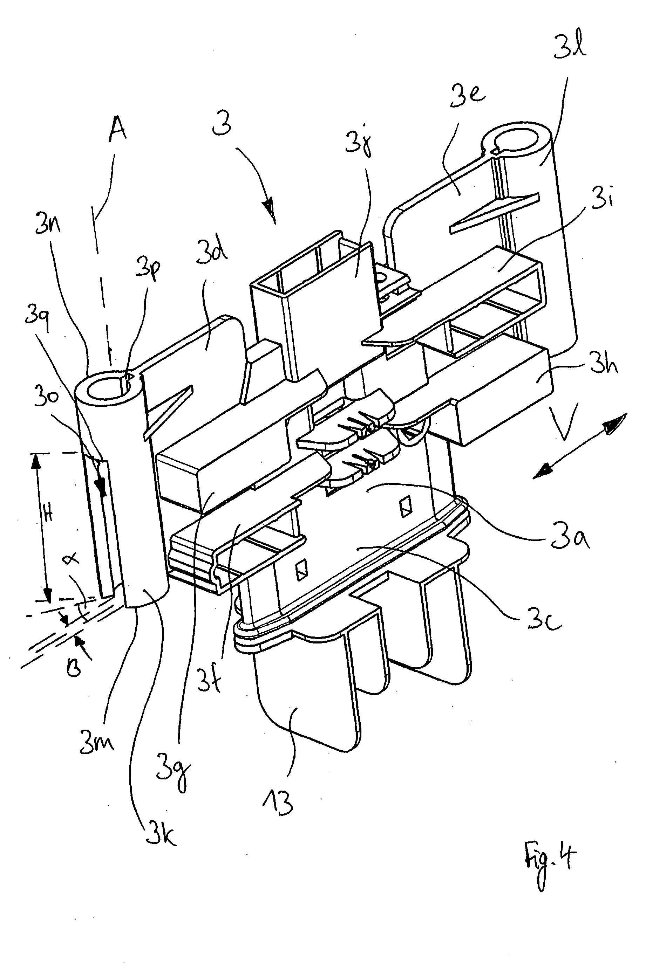

Außerdem ist zu erkennen, dass die Stromleiter 5a bis 5e in klammerartigen Hinterschneidungen 41 gehalten sind. An den Stromleitern 5a bis 5e liegen die Kontaktmittel 6a bis 6e zur Übertragung von Strom und/oder Steuersignalen zwischen den Stromleitern 5a bis 5e und dem Stromabnehmerwagen 1 a an. Die Kontaktmittel 6a bis 6e sind federnd in Richtung der Stromleiter 5a bis 5e in Taschen 3f bis 3j (siehe auch Figuren 3 und 4) des Körpers 3 des Stromabnehmerwagens 1a gelagert.

Auch ist gezeigt, dass ein als Träger 3a bezeichneter Teil des Körpers 3 nach unten zwischen den Wänden 4d, 4e aus der Schiene 4 heraus ragt und mit der elektrischen Leitung 12 (siehe Figur 1) und dem Gehäuse 14 verbunden ist.

Die Figur 3 zeigt eine perspektivische Ansicht des Stromabnehmerwagens 1 a gemäß Figur 1 mit den Fahrwerken 2a, 2b, die in Verfahrrichtung V gesehen vorne und hinten mit dem Körper 3 des Stromabnehmerwagens 1 a lösbar verbunden sind. Der Stromabnehmerwagen 1a wird von den beiden Fahrwerken 2a, 2b getragen und ist über diese entlang der stromführenden Schiene 4 verfahrbar. Der Körper 3 umfasst den flachen Träger 3a mit einem oberen ersten Ende 3b und einem unteren zweiten Ende 3c, an dem eine erste und eine zweite dünnwandige Tragwand 3d, 3e derart seitlich, das heißt in Verfahrrichtung V, angeordnet sind, dass sich eine T-förmige Gestalt des Körpers 3 ergibt. Die Tragwände 3d, 3e erstrecken sich gegenläufig von dem Träger 3a weggerichtet jeweils in einer der Verfahrrichtungen V. An dem Körper 3 sind die fünf jeweils behälterförmig und quaderförmig ausgebildeten und einseitig offenen Taschen 3f bis 3j angeordnet, die zur Aufnahme der Kontaktmittel 6a bis 6e dienen. Die erste Tragwand 3d ist unten von der ersten und oben von der zweiten Tasche 3f, 3g und die zweite Tragwand 3e unten von der dritten und oben von der vierten Tasche 3h, 3i durchzogen. Die Öffnungen der ersten und zweiten Taschen 3f, 3g sowie der dritten und vierten Taschen 3h, 3i zeigen jeweils in einander entgegengesetzte horizontale Richtungen quer zu den Verfahrrichtungen V, wobei zugleich die Öffnungen der oberen zweiten und vierten Taschen 3g, 3i sowie die Öffnungen der unteren ersten und dritten Taschen 3f, 3h jeweils in einander entgegengesetzte Richtungen zeigen. Am ersten Ende 3b des Trägers 3a ist zwischen den Tragwänden 3d, 3e die nach oben geöffnete fünfte Tasche 3j angeordnet.

An jeweils an einer von dem Träger 3a weg zeigenden vertikalen Kante der Tragwände 3d, 3e - und somit vorne und hinten an dem Stromabnehmerwagen 1a - sind aufnehmende Verbindungsmittel in Form einer ersten und einer zweiten Hülse 3k, 3l angeordnet. Die Hülsen 3k, 31 sind baugleich mit kreisrundem Querschnitt und mit einer Innenbohrung hohlzylindrisch ausgeführt. Bei einem Stromabnehmerwagen 1a in einer horizontal verlaufenden Schiene 4 sind die Innenbohrungen hinsichtlich ihrer Längserstreckung vertikal ausgerichtet. Auch weisen die Hülsen 3k, 3l jeweils einen unteren ersten Rand 3m und einen oberen zweiten Rand 3n auf (siehe Figur 4). Jede Hülse 3k, 31 wird im Übergangsbereich zwischen der Hülse 3k, 3l und der Tragwand 3d, 3e von einer Versteifung 3t gestützt. Die einander gegenüberliegenden und in entgegengesetzte vertikale Längsrichtungen der Hülsen 3k, 3l zeigenden Stirnseiten sind offen.

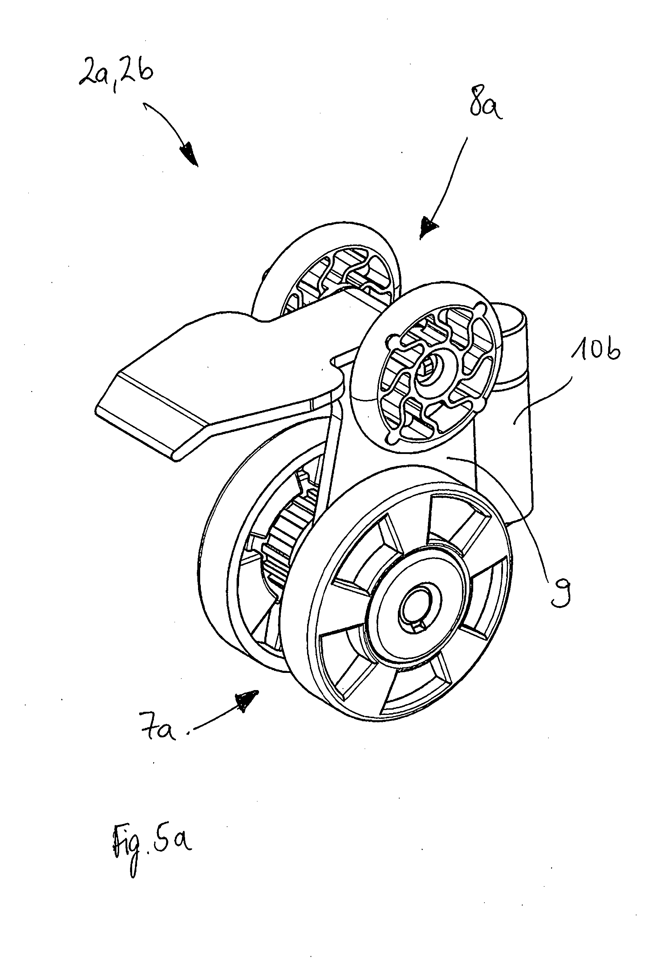

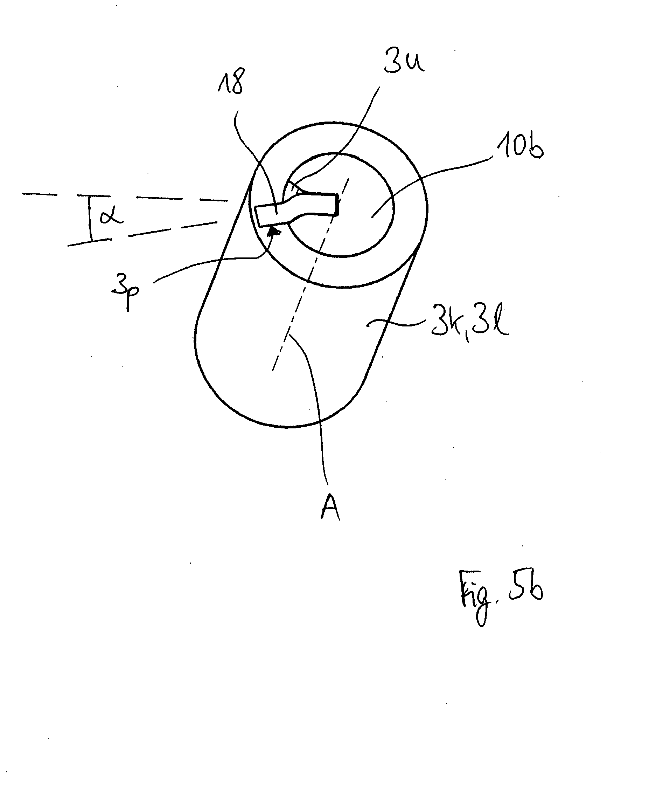

An der ersten Hülse 3k ist das erste Fahrwerk 2a und an der zweiten Hülse 3l das zweite Fahrwerk 2b befestigt. Die Fahrwerke 2a, 2b sind baugleich ausgeführt und weisen jeweils einen vertikalen und wandartigen Tragkörper 9 (siehe Figuren 5a und 5b) auf, in dem ein unterer erster Radsatz 7a mit zwei unteren Laufrädern 7b, 7c und ein oberer zweiter Radsatz 8a mit zwei oberen Führungsrädern 8b, 8c drehbar gelagert aufgenommen sind. Ein nicht dargestellter zylinderförmiger erster Bolzen 10b (siehe Figuren 5a und 5b) ist als starr ausgebildetes und aufzunehmendes Verbindungsmittel an dem Tragkörper 9 befestigt. Zwischen den ersten und zweiten Führungsrädern 8b, 8c ist eine flache, plattenförmige Zunge 17 angeordnet, die als Einfahrhilfe bei der Einfahrt in einen trichterförmigen Bereich der Schiene 4 dient. Die Fahrwerke 2a, 2b sind selbstverständlich auch ohne eine solche Zunge 17 funktionsfähig. Der Aufbau der Fahrwerke 2a, 2b ist im Detail in den Figuren 5a und 5b dargestellt. Der Außendurchmesser des Bolzens 10b ist geringer als der Innendurchmesser der Hülse 3k, 3l. Der Bolzen 10b wird vom unteren ersten Rand 3m her in die Hülse 3k, 3l eingeschoben bis der durch eine in der Hülse 3k, 3l vorgesehene vertikale schlitzförmige Aussparung 3o nach außen ragende und durch die Aussparung 3o geführte Tragkörper 9 mit einer oberen Kante an einem dritten Rand 3q (siehe Figur 4) anschlägt und sich der Körper 3 somit über den Rand 3q an dem Tragkörper 9 abstützt. Die Fahrwerke 2a, 2b sind auf diese Weise zumindest in einer Ausführungsform formschlüssig mit dem Stromabnehmerwagen 1a verbunden. Der Tragkörper 9 und somit die Fahrwerke 2a, 2b sind gelenkig am Körper 3 angeordnet und innerhalb eines von einer Breite B (siehe Figur 4) der Aussparung 3o und den Abmaßen des Tragkörpers 9 abhängigen Winkels α (siehe Figur 4) um eine vertikale Achse A scharnierartig schwenkbar. Mit anderen Worten ist die Schwenkbarkeit der Fahrwerke 2a, 2b durch die geometische Ausgestaltung der Aussparung 3o begrenzt. Die Achse A ist durch den Bolzen 10b beziehungsweise eine vertikale Mittelachse des Bolzens 10b verkörpert und fällt hierbei mit einer Mittelachse der Hülse 3k, 3l zusammen.

Die Achse A muss jedoch nicht konzentrisch mit den Mittelachsen des aufnehmenden und des aufzunehmenden Verbindungsmittels beziehungsweise der Hülse 3k, 31 und des Bolzens 10b zusammenfallen. Es ist ebenso möglich, dass die Achse A zwar durch eines der Verbindungsmittel verläuft, hierbei jedoch exzentrisch bezüglich eventueller Mittelachsen der Verbindungsmittel liegt. Bei einer umgestalteten Aussparung 3o kann der Bolzen 10b vom oberen zweiten Rand 3n ausgehend in die Hülse 3k, 31 eingeschoben werden. Es ist auch möglich, einen Schwenkmechanismus vorzusehen, dessen Gelenkigkeit auf andere Weise - ohne einen durch eine Aussparung 3o hindurch ragenden Tragkörper 9 - formschlüssig oder kraftschlüssig wirkend realisiert ist. Es ist selbstverständlich auch möglich, die Hülsen 3k, 3l fahrwerkseitig und jeweils einen Tragkörper 9 mit einem Bolzen 10b am Körper 3 anzuordnen.

Auf einer den Radsätzen 7a, 8a gegenüberliegenden Seite des Fahrwerks 2a, 2b kann in einer zweiten Ausführungsform (siehe Figur 5b) am Bolzen 10b eine in Längsrichtung des Bolzens 10b verlaufende zweite Nut 3u vorgesehen sein, die radial bezüglich der Achse A angeordnet ist. In dieser Radialrichtung gesehen weist der Querschnitt der zweiten Nut 3u ausgehend von der Mantelfläche einen ins Innere des Bolzens 10b verlaufenden trichterförmigen Bereich auf, an den ein rechteckig ausgebildeter Querschnittsbereich angrenzt (siehe Figur 5b). Im mit dem Körper 3 verbundenen und unausgeschwenkten Zustand des Fahrwerks 2a, 2b ist die zweite Nut 3u einer in der Hülse 3k, 3l vorgesehenen und ebenfalls vertikal verlaufenden ersten Nut 3p mit einem rechteckigen Querschnitt gegenüberliegend angeordnet. In die erste Nut 3p kann ein längliches und quaderförmiges Rückstellelement 18 mit komplementär zu der ersten Nut 3p ausgebildetem Querschnitt eingeschoben werden, dass stegartig in radialer Richtung in das Innere der Hülse 3k, 3l hineinragt. Das Rückstellelement 18 besteht aus einem elastisch verformbaren Material, beispielsweise einem Gummiwerkstoff. Beim Zusammenbringen des Körpers 3 mit dem Fahrwerk 2a, 2b wird das in der zweiten Nut 3u befestigte Rückstellelement 18 formschlüssig mit der ersten Nut 3p der Hülse 3k, 31 verbunden. Durch Zusammenwirken des Rückstellelements 18 mit der ersten Nut 3p wird eine federnd schwenkbare Positionierung der Fahrwerke 2a, 2b ermöglicht. Hierbei übernimmt das Rückstellelement 18 insbesondere eine Rückstellfunktion, wodurch die sich während einer Kurvenfahrt eingestellte Auslenkung der Fahrwerke 2a, 2b um den Winkel α in einer Geradeausfahrt selbsttätig aufgehoben wird. Mit anderen Worten wird durch die beschriebene Anordnung des Rückstellelementes 18 die Geradeausfahrt des ersten Stromabnehmerwagens 1a als Gleichgewichtslage festgelegt, in dem sich das Rückstellelement 18 in einem unbelasteten Zustand befindet, der sich automatisch einstellt, sobald eine Kurvenfahrt beendet und die dabei auftretende äußere Kraftbeaufschlagung des Rückstellelementes 18 aufgehoben ist. Somit richten sich die Fahrwerke 2a, 2b selbsttätig durch die Rückstellkraft des Federelementes 18 in der Verfahrrichtung V aus. Die elastisch-federnde Rückstellwirkung beziehungsweise innere Rückstellkraft des Rückstellelementes 18 lässt sich beispielsweise durch die Auswahl verschiedener Materialien mit entsprechend unterschiedlichen Werkstoffkennwerten oder durch eine Anpassung der geometrischen Abmessungen, insbesondere der Länge des Rückstellelementes 18, variieren.

An dem Träger 3a sind zudem auf zwei quer zu den Verfahrrichtungen V zeigenden Seiten jeweils baugleich zwei horizontale und parallel übereinander beabstandete Lagerplatten 3r, 3s vorgesehen, zwischen denen jeweils ein horizontales drittes seitliches Führungsrad 11 drehbar gelagert aufgenommen ist.

Die Kontaktmittel 6a bis 6e des Stromabnehmerwagens 1 a sind jeweils mit einem nicht dargestellten ersten Ende eines Stromkabels leitend verbunden. Sämtliche Stromkabel werden in der elektrischen Leitung 12 zusammengeführt, die mit der strommäßig zu versorgenden Anlage verbunden ist. Die elektrische Leitung 12 ist über ein an dem unteren zweiten Ende 3c befindliches Anschlussteil 13 (siehe Figur 4) mit dem Stromabnehmerwagen 1a verbunden. Die Verbindungsstelle wird von dem Gehäuse 14 umschlossen.

In der Figur 4 ist eine perspektivische Ansicht des Körpers 3 ohne die Fahrwerke 2a, 2b, 2c dargestellt. Besonders deutlich sichtbar sind der Träger 3a, die daran angrenzenden Tragwände 3d, 3e sowie die an den Tragwänden 3d, 3e angeordneten Taschen 3f bis 3j, insbesondere die Öffnungen der Taschen 3f, 3i, 3j.

Zudem ist die vertikale schlitzförmige Aussparung 3o mit der minimalen Breite B in einer Hülsenwand der Hülse 3k, 31 vorgesehen. Die Aussparung 3o ist so angeordnet, dass sie von dem Träger 3a in einer der Verfahrrichtungen V weg zeigt, an dem horizontalen unteren ersten Rand 3m beginnt, diesen nach oben verlaufend unterbricht und nach oben von dem mittleren, ebenfalls horizontalen und parallel zum ersten Rand 3m versetzten dritten Rand 3q begrenzt wird. Im Innern der Hülsen 3k, 3l ist die vertikal verlaufende erste Nut 3p mit rechteckigem Querschnitt vorgesehen, die der Aussparung 3o gegenüberliegend angeordnet ist und mit der Tragwand 3d, 3e in einer Ebene verläuft.

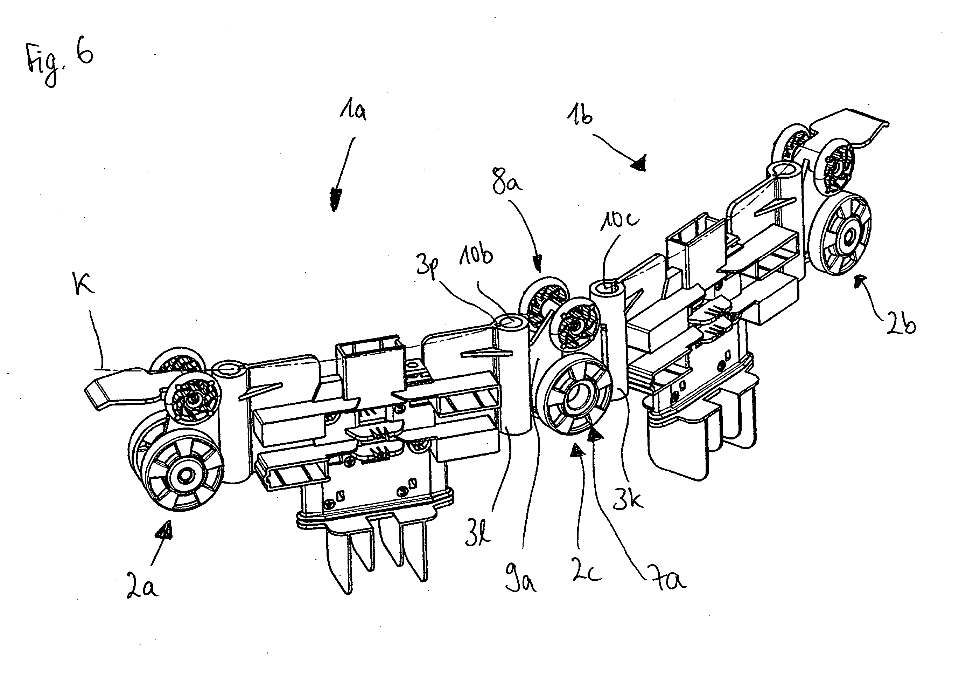

Die Aussparung 3o in der Hülse 3k, 3l hat eine Höhe H, die sich als Abstand des unteren ersten Randes 3m vom mittleren dritten Rand 3q ergibt, so dass lediglich oberhalb der Aussparung 3o zwischen dem mittleren dritten Rand 3q und dem oberen zweiten Rand 3n eine geschlossene und regelmäßige Mantelfläche erhalten bleibt. Der Winkel α wird von einer gedachten Linie, die in einer Ebene mit den Tragwänden 3d, 3e verläuft und die Achse A schneidet, und einer Innenseite der Aussparung 3o der Hülse 3k, 31 gebildet. Maßgeblich ist dabei die Breite B (siehe auch Figur 6) der Innenseite als minimales horizontales Maß der Aussparung 3o.

Es ist ebenso möglich, dass die Aussparung 3o in vertikaler Richtung durchgehend verläuft, auch den zweiten Rand 3n unterbricht und keinen dritten Rand 3q entstehen lässt. Die vertikal geteilte Mantelfläche der Hülse 3k, 3l bildet somit zwei federnde Rastarme, die eine Aufnahme des Bolzens 10b beispielsweise in Form einer Schnappverbindung oder Clipverbindung durch formschlüssiges und kraftschlüssiges Zusammenfügen in einer der Verfahrrichtungen V erlaubt. Auch ist das nach unten gerichtete Anschlussteil 13 am zweiten Ende 3c des Trägers 3 dargestellt.

Die Figur 5a zeigt das erste und zweite Fahrwerk 2a, 2b mit den Radsätzen 7a, 8a, die übereinander liegend jeweils mit dem Tragkörper 9 verbunden sind. Der in seiner Längserstreckung vertikal ausgerichtete Bolzen 10b ist an einer von den Radsätzen 7a, 8a beabstandeten vertikalen Seite des Tragkörpers 9 angeordnet.

In Figur 5b ist eine Teilansicht der Verbindung zwischen dem ersten beziehungsweise zweiten Fahrwerk 2a, 2b in der dritten Ausführungsform mit dem Körper 3 in einer ausgeschwenkten Position dargestellt. Gezeigt ist insbesondere das Rückstellelement 18, das in der ersten Nut 3p der Hülse 3k, 3l angeordnet und gleichzeitig von der zweiten Nut 3u des Bolzens 10b aufgenommen ist. Es ist darüber hinaus erkennbar, dass das Rückstellelement 18 infolge einer Auslenkung beziehungsweise Rotation des Bolzens 10b gegenüber der Hülse 3k, 3l beziehungsweise um die Achse A und um den Winkel α verformt ist.

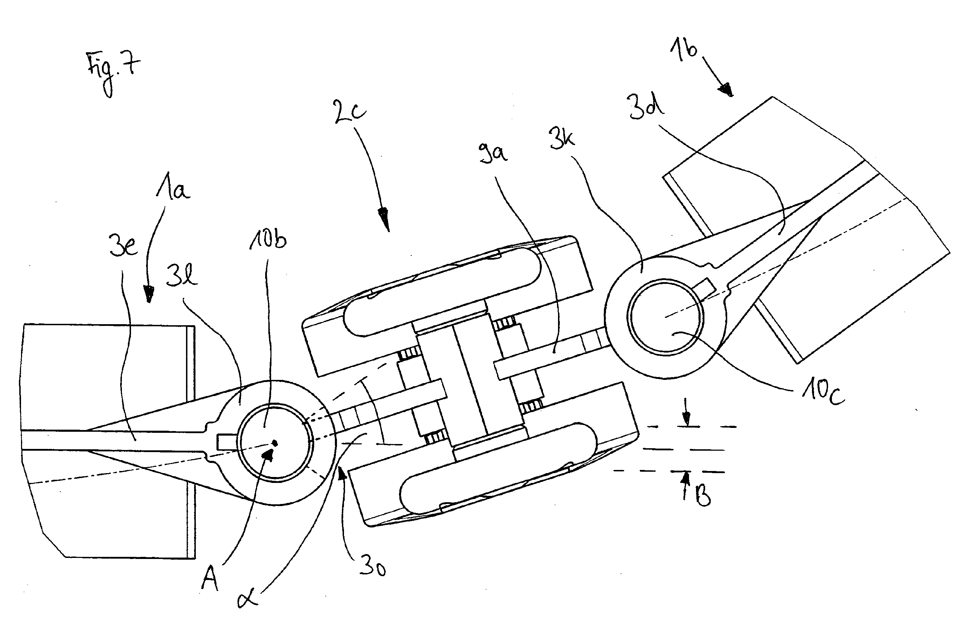

Die Figur 6 zeigt den ersten Stromabnehmerwagen 1 a mit einem ersten Fahrwerk 2a und einen zweiten Stromabnehmerwagen 1 b mit einem zweiten Fahrwerk 2b. Die Stromabnehmerwagen 1a, 1 b sind auf einer Kurvenbahn K verfahrbar und über ein drittes Fahrwerk 2c miteinander gekoppelt. Das dritte Fahrwerk 2c umfasst - analog zum Tragkörper 9 der Fahrwerke 2a, 2b - einen wandartigen Verbindungssteg 9a. Die Form des Verbindungsstegs 9a ähnelt zwei zusammengesetzten und eine vertikale Symmetrieachse bildenden Tragkörpern 9. An zwei von einander abgewandten Enden des Verbindungsstegs 9a sind jeweils der erste Bolzen 10b und ein zweiter Bolzen 10c hinsichtlich ihrer Längserstreckung vertikal ausgerichtet angeordnet. Der Verbindungssteg 9a nimmt zwischen den Bolzen 10b, 10c und entlang der Symmetrieachse zwei Radsätze 7a, 8a übereinander und drehbar gelagert auf. Um die beiden Stromabnehmerwagen 1a, 1b miteinander zu verbinden, wird der Bolzen 10b in die Hülse 3l des ersten Stromabnehmerwagens 1 a und der Bolzen 10c in die Hülse 3k des zweiten Stromabnehmerwagens 1b eingeschoben. Die Bolzen 10b, 10c sind baugleich in der ersten Ausführungsform ausgeführt, und weisen somit eine regelmäßige Manteloberfläche auf. Es wird somit jeweils kein Formschluss zwischen den Bolzen 10b, 10c und der ersten Nut 3p erwirkt, wodurch das Fahrwerk 2c bezüglich der Stromabnehmerwagen 1 a, 1 b innerhalb des Winkels α schwenkbar ist (siehe auch Figur 7). Selbstverständlich ist es - analog zur Ausgestaltung der Fahrwerke 2a, 2b - auch möglich, an den Bolzen 10b, 10c jeweils eine zweite Nut 3u und ein Rückstellelement 18 vorzusehen, um eine elastisch-federnde Schwenkbarkeit des Fahrwerks 2c gegenüber den Stromabnehmerwagen 1 a, 1 b zu ermöglichen.

Die Figur 7 zeigt eine Ansicht der über die Bolzen 10b, 10c des dritten Fahrwerks 2c gekoppelten Stromabnehmerwagen 1 a, 1 b. Es ist eine gegenüber den Tragwänden 3d, 3e ausgeschwenkte Position des Verbindungsstegs 9a des Fahrwerks 2c ohne die Radsätze 7a, 7b dargestellt. Gekennzeichnet sind zudem die punktförmig dargestellte Achse A sowie die Breite B der Aussparung 3o. In der maximal möglichen Auslenkung mit dem Winkel α liegt der Verbindungssteg 9a an einer der Innenseiten der Aussparung 3o der Hülse 31 an. Entsprechendes gilt analog für die Winkelverhältnisse an der Hülse 3k zwischen dem Verbindungssteg 9a und der ersten Tragwand 3d des zweiten Stromabnehmerwagens 1 b.

Die variable Einstellung von elastisch-federnder und nicht-federnder Schwenkbarkeit der Fahrwerke 2a, 2b, 2c gegenüber dem Körper 3 entsteht vorzugsweise durch einen anwendungsspezifischen Austausch beziehungsweise Einsatz entsprechend modular ausgestalteter Fahrwerke 2a, 2b, 2c. Mit anderen Worten wird die entsprechende Art der Schwenkbarkeit somit durch die beschriebenen Verbindungen zwischen zwei für sich genommen starren Verbindungsmitteln - beispielsweise zwischen den in die Hülsen 3k, 3l eingeschobenen und darin drehbaren Bolzen 10b, 10c, an denen die zweite Nut 3u für das Rückstellelement 18 vorgesehen ist - hergestellt.

Die einander entgegengesetzten Verfahrrichtungen V können außer in der vorstehend beschriebenen im Wesentlichen horizontalen Ausrichtung selbstverständlich auch nicht horizontal ausgerichtet sein und somit verschiedene Steigungsgrade abbilden.

Auch können die Fahrwerke 2a, 2b, 2c mit dem Körper 3 nicht nur durch eine relative Bewegung der Fahrwerke 2a, 2b, 2c und des Körpers 3 parallel zur Achse A, sondern auch quer zu der Achse A verbunden werden.

### Bezugszeichenliste

- 1a: erster Stromabnehmerwagen
- 1b: zweiter Stromabnehmerwagen
- 2a: erstes Fahrwerk
- 2b: zweites Fahrwerk
- 2c: drittes Fahrwerk
- 3: Körper
- 3a: Träger
- 3b: erstes Ende
- 3c: zweites Ende
- 3d: erste Tragwand
- 3e: zweite Tragwand
- 3f: erste Tasche
- 3g: zweite Tasche
- 3h: dritte Tasche
- 3i: vierte Tasche
- 3j: fünfte Tasche
- 3k: erste Hülse
- 3l: zweite Hülse
- 3m: erster Rand
- 3n: zweiter Rand
- 3o: Aussparung
- 3p: erste Nut
- 3q: dritter Rand
- 3r: erste Lagerplatte
- 3s: zweite Lagerplatte
- 3t: Versteifung
- 3u: zweite Nut
- 4: Schiene
- 4a: Stegwand
- 4b: erste Schenkelwand
- 4c: zweite Schenkelwand
- 4d: erste Anschlusswand
- 4e: zweite Anschlusswand
- 4f: erste Lauffläche
- 4g: zweite Lauffläche
- 4h: dritte Lauffläche
- 4i: vierte Lauffläche
- 4j: Innenraum
- 4k: Öffnung
- 4l: Hinterschneidung
- 5a: erster Stromleiter
- 5b: zweiter Stromleiter
- 5c: dritter Stromleiter
- 5d: vierter Stromleiter
- 5e: fünfter Stromleiter
- 6a: erstes Kontaktmittel
- 6b: zweites Kontaktmittel
- 6c: drittes Kontaktmittel
- 6d: viertes Kontaktmittel
- 6e: fünftes Kontaktmittel
- 7a: erster Radsatz
- 7b: erstes Laufrad
- 7c: zweites Laufrad
- 8a: zweiter Radsatz
- 8b: erstes Führungsrad
- 8c: zweites Führungsrad
- 9: Tragkörper
- 9a: Verbindungssteg
- 10b: erster Bolzen
- 10c: zweiter Bolzen
- 11: drittes Führungsrad
- 12: elektrische Leitung
- 13: Anschlussteil
- 14: Gehäuse
- 15: Kranlaufkatze
- 15a: erste Laufschiene
- 15b: zweite Laufschiene
- 15c: erster Mitnehmer
- 15d: zweiter Mitnehmer
- 16: Motor
- 17: Zunge
- 18: Rückstellelement
- α: Winkel
- A: Achse
- B: Breite
- H: Höhe
- K: Kurvenbahn
- V: Verfahrrichtungen

## Patentansprüche

1. Stromabnehmerwagen (1a, 1b) mit lösbar mit einem Körper (3) verbundenen Fahrwerken (2a, 2b, 2c), über die der Stromabnehmerwagen (1a, 1b) entlang einer Schiene (4) mit mehreren Stromleitern (5a, 5b, 5c, 5d, 5e) verfahrbar ist, und der Stromabnehmerwagen (1a, 1b) mit den Stromleitern (5a, 5b, 5c, 5d, 5e) in elektrischem Kontakt steht, wobei die Fahrwerke (2a, 2b, 2c) relativ zu dem Körper (3) jeweils um eine Achse (A) des Stromabnehmerwagens (1a, 1b) schwenkbar sind, die Achse (A) vertikal bezüglich einer Ebene ausgerichtet ist, die bezogen auf den mit seiner Längserstreckung in einer Verfahrrichtung (V) ausgerichteten Stromabnehmerwagen (1a, 1b) horizontal verläuft und die Fahrwerke (2a, 2b, 2c) über eine mit einem Bolzen (10b, 10c) in Eingriff stehende Hülse (3k, 31) mit dem Körper (3) verbunden sind, **dadurch gekennzeichnet, dass** der Bolzen (10b, 10c) und die Hülse (3k, 31) derart ausgebildet sind, dass die Verbindung zwischen den Fahrwerken (2a, 2b, 2c) und dem Körper (3) durch eine relative Bewegung der Fahrwerke (2a, 2b, 2c) und des Körpers (3) parallel zur vertikalen Achse (A) herstellbar ist.

2. Stromabnehmerwagen nach Anspruch 1, **dadurch gekennzeichnet, dass** die Fahrwerke (2a, 2b, 2c) nach Art eines Scharniergelenks mit dem Körper (3) verbunden sind.

3. Stromabnehmerwagen nach Anspruch 1 oder 2, **dadurch gekennzeichnet, dass** ein elastisches Rückstellelement (18) vorgesehen ist, das mit dem Bolzen (10b, 10c) und der Hülse (3k, 31) derart zusammenwirkt, dass sich die Fahrwerke (2a, 2b, 2c) bei einer Geradeausfahrt des Stromabnehmerwagens (1 a, 1 b) selbsttätig in der Verfahrrichtung (V) ausrichten.

4. Stromabnehmerwagen nach einem der Ansprüche 1 bis 3, **dadurch gekennzeichnet, dass** der Bolzen (10b, 10c) einen rundlichen Querschnitt aufweist und sich mit seiner Längserstreckung parallel zur Achse (A) erstreckt.

5. Stromabnehmerwagen nach einem der Ansprüche 1 bis 4, **dadurch gekennzeichnet, dass** die Fahrwerke (2a, 2b, 2c) formschlüssig mit dem Körper (3) verbindbar sind.

6. Stromabnehmerwagen nach einem der Ansprüche 1 bis 5, **dadurch gekennzeichnet, dass** die Hülse (3k, 3l) an einem in eine Längsrichtung der Hülse (3k, 31) zeigenden Ende offen ist und der Bolzen (10b, 10c) durch das offene Ende in die Hülse (3k, 31) einschiebbar ist.

7. Stromabnehmerwagen nach einem der Ansprüche 1 bis 6, **dadurch gekennzeichnet, dass** die Hülse (3k, 31) eine Wand mit einer schlitzförmigen Aussparung (3o) aufweist, die die Wand an einem ersten Rand (3m) beginnend teilweise oder vollständig in vertikaler Richtung mit einer Breite (B) durchzieht und durch die ein mit dem Bolzen (10b, 10c) verbundener Tragkörper (9) geführt ist, der sich mit einer oberen Kante an einem dritten Rand (3q) der Hülse (3k, 31) abstützt.

8. Anordnung von Stromabnehmerwagen nach einem der Ansprüche 1 bis 7, **dadurch gekennzeichnet, dass** ein drittes Fahrwerk (2c) zwei Bolzen (10b, 10c) umfasst, die in Verfahrrichtung (V) des Stromabnehmerwagens (1a, 1b) gegenüberliegend vorne und hinten angeordnet sind.

9. Anordnung von Stromabnehmerwagen nach Anspruch 8, **dadurch gekennzeichnet, dass** ein erster Stromabnehmerwagen (1 a) und mindestens ein zweiter Stromabnehmerwagen (1b) mittels des dritten Fahrwerks (2c) mit einander verbindbar sind.

10. Stromabnehmerwagen nach einem der Ansprüche 1 bis 9, **dadurch gekennzeichnet, dass** die Bolzen (10b, 10c) an den Fahrwerken (2a, 2b, 2c) und die Hülsen (3k, 31) am Körper (3) des Stromabnehmerwagens (1a, 1 b) oder die Bolzen (10b, 10c) am Körper (3) des Stromabnehmerwagens (1a, 1b) und die Hülsen (3k, 31) an den Fahrwerken (2a, 2b, 2c) angeordnet sind.

11. Stromabnehmerwagen nach einem der Ansprüche 1 bis 10, **dadurch gekennzeichnet, dass** an jedem Fahrwerk (2a, 2b, 2c) Laufräder (7b, 7c) und Führungsräder (8b, 8c, 11) angeordnet sind.

12. Stromabnehmerwagen nach einem der Ansprüche 1 bis 11, **dadurch gekennzeichnet, dass** der Stromabnehmerwagen (1a, 1b) mit den Stromleitern (5a, 5b, 5c, 5d, 5e) über an dem Stromabnehmerwagen (1a, 1b) angeordnete Kontaktmittel (6a, 6b, 6c, 6d, 6e) in Strom leitendem Schleifkontakt steht.

## Claims

1. Current collecting trolley (1 a, 1 b), having sets of running gear (2a, 2b, 2c) which are releasably connected to a main body (3) and by means of which the current collecting trolley (1a, 1b) is displaceable along a rail (4) having a plurality of current conductors (5a, 5b, 5c, 5d, 5e), and the current collecting trolley (1 a, 1 b) is in electrical contact with the current conductors (5a, 5b, 5c, 5d, 5e), the sets of running gear (2a, 2b, 2c) each being pivotable relative to the main body (3) on an axis (A) of the current collecting trolley (1 a, 1 b), the axis (A) being vertically aligned relative to a plane which extends horizontally relative to the current collecting trolley (1 a, 1 b) when the latter is aligned with its longitudinal extent in a direction of displacement (V), and the sets of running gear (2a, 2b, 2c) being connected to the main body (3) by means of a sleeve (3k, 3l) which engages with a trunnion (10b, 10c), **characterised in that** the trunnion (10b, 10c) and the sleeve (3k, 3l) are so designed that the connection between the sets of running gear (2a, 2b, 2c) and the main body (3) can be made by a relative movement of the sets of running gear (2a, 2b, 2c) and the main body (3) parallel to the vertical axis (A).

2. Current collecting trolley according to claim 1, **characterised in that** the sets of running gear (2a, 2b, 2c) are connected to the main body (3) after the fashion of a hinged joint.

3. Current collecting trolley according to claim 1 or 2, **characterised in that** an elastic return member (18) is provided which co-operates with the trunnion (10b, 10c) and the sleeve (3k, 31) in such a way that the sets of running gear (2a, 2b, 2c) automatically align themselves in the direction of displacement (V) when the current collecting trolley (1 a, 1 b) is travelling straight ahead.

4. Current collecting trolley according to one of claims 1 to 3, **characterised in that** the trunnion (10b, 10c) is of rounded cross-section and its longitudinal extent extends parallel to the axis (A).

5. Current collecting trolley according to one of claims 1 to 4, **characterised in that** the sets of running gear (2a, 2b, 2c) can be connected to the main body (3) by positive interengagement.

6. Current collecting trolley according to one of claims 1 to 5, **characterised in that** the sleeve (3k, 31) is open at an end facing in a longitudinal direction of the sleeve (3k, 3l), and the trunnion (10b, 10c) can be inserted in the sleeve (3k, 3l) through the open end.

7. Current collecting trolley according to one of claims 1 to 6, **characterised in that** the sleeve (3k, 3l) has a wall containing a slotted opening (3o) which, beginning at a first edge (3m), passes in the vertical direction through all or part of the wall over a width (B) and by which a supporting body (9) connected to the trunnion (10b, 10c) is guided, which supporting body (9) is supported against a third edge (3q) of the sleeve (3k, 3l) by an upper edge.

8. Arrangement of current collecting trolleys according to one of claims 1 to 7, **characterised in that** a third set of running gear (2c) comprises two trunnions (10b, 10c) which are arranged in opposite positions at the front and rear in the direction of displacement (V) of the current collecting trolley (1 a, 1 b).

9. Arrangement of current collecting trolleys according to claim 8, **characterised in that** a first current collecting trolley (1a) and at least one second current collecting trolley (1 b) can be connected together by means of the third set of running gear (2c).

10. Current collecting trolley according to one of claims 1 to 9, **characterised in that** the trunnions (10b, 10c) are arranged on the sets of running gear (2a, 2b, 2c) and the sleeves (3k, 3l) are arranged on the main body (3) of the current collecting trolley (1 a, 1b), or the trunnions (10b, 10c) are arranged on the main body (3) of the current collecting trolley (1 a, 1 b) and the sleeves (3k, 3l) are arranged on the sets of running gear (2a, 2b, 2c).

11. Current collecting trolley according to one of claims 1 to 10, **characterised in that** travel wheels (7b, 7c) and guiding wheels (8b, 8c, 11) are arranged on each set of running gear (2a, 2b, 2c).

12. Current collecting trolley according to one of claims 1 to 11, **characterised in that** the current collecting trolley (1 a, 1 b) is in current-conducting sliding contact with the current conductors (5a, 5b, 5c, 5d, 5e) via contact means (6a, 6b, 6c, 6d, 6e) arranged on the current collecting trolley (1 a, 1 b).

## Revendications

1. Chariot collecteur de courant (1 a, 1 b) comportant des mécanismes de roulement (2a, 2b, 2c), reliés de manière amovible à un corps (3), qui permettent de déplacer le chariot collecteur de courant (1 a, 1 b) le long d'un rail (4) doté d'une pluralité de conducteurs de courant (5a, 5b, 5c, 5d, 5e) et de mettre le chariot collecteur de courant (1 a, 1 b) en contact électrique avec les conducteurs de courant (5a, 5b, 5c, 5d, 5e), chacun des mécanismes de roulement (2a, 2b, 2c) étant apte à pivoter par rapport au corps (3) sur un axe (A) du chariot collecteur de courant (1 a, 1 b), l'axe (A) étant orienté verticalement par rapport à un plan qui s'étend horizontalement par rapport au chariot collecteur de courant (1 a, 1 b) dont l'extension longitudinale est orientée dans une direction de déplacement (V), et les mécanismes de roulement (2a, 2b, 2c) étant reliés au corps (3) par un manchon (3k, 31) en engagement avec un boulon (10b, 10c), **caractérisé en ce que** le boulon (10b, 10c) et le manchon (3k, 31) sont formés de telle sorte que la liaison entre les mécanismes de roulement (2a, 2b, 2c) et le corps (3) peut être établie par un mouvement relatif des mécanismes de roulement (2a, 2b, 2c) et du corps (3) parallèlement à l'axe vertical (A).

2. Chariot collecteur de courant selon la revendication 1, **caractérisé en ce que** les mécanismes de roulement (2a, 2b, 2c) sont reliés au corps (3) à la manière d'une articulation à charnière.

3. Chariot collecteur de courant selon la revendication 1 ou 2, **caractérisé en ce qu'**il est prévu un élément de rappel élastique (18) qui coopère avec le boulon (10b, 10c) et le manchon (3k, 31) de manière à ce que les mécanismes de roulement (2a, 2b, 2c) s'orientent automatiquement dans la direction de déplacement (V) lorsque le chariot collecteur de courant (1 a, 1 b) sort en ligne droite.

4. Chariot collecteur de courant selon l'une des revendications 1 à 3, **caractérisé en ce que** le boulon (10b, 10c) a une section transversale arrondie, et **en ce que** son extension longitudinale est parallèle à l'axe (A).

5. Chariot collecteur de courant selon l'une des revendications 1 à 4, **caractérisé en ce que** les mécanismes de roulement (2a, 2b, 2c) sont reliés au corps (3) par complémentarité de formes.

6. Chariot collecteur de courant selon l'une des revendications 1 à 5, **caractérisé en ce que** le manchon {3k, 3l) est ouvert à une extrémité pointant dans une direction longitudinale du manchon (3k, 31), et **en ce que** le boulon (10b, 10c) peut être inséré dans le manchon (3k, 31) par l'extrémité ouverte.

7. Chariot collecteur de courant selon l'une des revendications 1 à 6, **caractérisé en ce que** le manchon (3K, 3l) possède une paroi dotée d'un évidement (3o) en forme de fente qui traverse la paroi, à partir d'un premier bord (3m), partiellement ou totalement dans une direction verticale avec une largeur (B) et qui permet de guider le corps de support (9) qui est relié au boulon (10b, 10c) et qui s'appuie par un bord supérieur sur un troisième bord (3q) du manchon (3k, 3l).

8. Agencement de chariot collecteur de courant selon l'une des revendications 1 à 7, **caractérisé en ce qu'**un troisième mécanisme de roulement (2c) comporte deux boulons (10b, 10c) qui sont disposés l'un derrière l'autre par référence à la direction de déplacement (V) du chariot collecteur de courant (1 a, 1 b).

9. Agencement de chariot collecteur de courant selon la revendication 8, **caractérisé en ce qu'**un premier chariot collecteur de courant (1a) et au moins un second chariot collecteur de courant (1 b) sont reliés l'un à l'autre au moyen du troisième mécanisme de roulement (2c).

10. Chariot collecteur de courant selon l'une des revendications 1 à 9, **caractérisé en ce que** les boulons (10b, 10c) sont disposés au niveau des mécanismes de roulement (2a, 2b, 2c) et les manchons (3k, 3l) sont disposés au niveau du corps (3) du chariot collecteur de courant (1 a, 1 b) ou les boulons (10b, 10c) sont disposés au niveau du corps (3) du chariot collecteur de courant (1 a, 1 b) et les manchons (3k, 3l) sont disposés au niveau des mécanismes de roulement (2a, 2b, 2c).

11. Chariot collecteur de courant selon l'une des revendications 1 à 10, **caractérisé en ce que** des roues de roulement (7b, 7c) et des roues de guidage (8b, 8c, 11) sont disposées au niveau de chaque mécanisme de roulement (2a, 2b, 2c).

12. Chariot collecteur de courant selon l'une des revendications 1 à 11, **caractérisé en ce que** le chariot collecteur de courant (1a, 1b) est en contact de conduction de courant par frottement avec les conducteurs de courant (5a, 5b, 5c, 5d, 5e) via des moyens de contact (6a. 6b, 6c, 6d, 6e) disposés au niveau du chariot collecteur de courant (1 a, 1 b).
